# EUROPEAN PATENT APPLICATION

(11) **EP 2 190 225 A1**
(43) Date of publication of application: **26.05.2010**
(21) Application number: 08827243.0
(22) Date of filing: 15.08.2008
(51) Int. Cl.: H04W 4/00, H04J 1/00, H04M 11/00

(54) **MOBILE COMMUNICATION SYSTEM, MOBILE STATION AND RADIO BASE STATION**

(30) Priority: 15.08.2007 JP 2007211994
(71) Applicant: NTT DoCoMo, Inc., Chiyoda-ku Tokyo 100-6150 (JP)
(72) Inventor: UMESH, Anil c/o NTT DoCoMo, Inc., Tokyo 100-6150 (JP); HANAKI, Akihito c/o NTT DoCoMo, Inc., Tokyo 100-6150 (JP)
(74) Representative: HOFFMANN EITLE
(86) International application number: PCT/JP2008/064648
(87) International publication number: WO 2009/022742

(57) **Abstract**

In a mobile communication system according to the present invention, a mobile station (UE) is configured to transmit uplink data to a radio base station (eNB) by using an uplink radio resource allocated by the radio base station (eNB). The mobile station (UE) is configured to report an amount of data remaining in a transmission buffer of the mobile station (UE) to the radio base station (eNB) by use of the allocated uplink radio resource, upon completion of a predetermined number of times of allocation of the uplink radio resource to the mobile station (UE) by the radio base station (eNB).

## Description

### Technical Field

The present invention relates to a mobile communication system, a mobile station, and a radio base station.

### Background Art

The 3GPP, which is the international standardization organization for the third generation mobile communication system, is currently studying and energetically designing standard specifications on a radio access scheme and a radio access network necessary for achieving drastic improvements in peak transmission rates, transmission efficiency, and transmission delays in downlink to transmit data from a radio base station eNB to a mobile station UE and in uplink to transmit data from the mobile station UE to the radio base station eNB.

The study and the studied techniques are referred to as Evolved UTRA or Long Term Evolution (LTE), for example.

In the LTE, high-speed uplink radio resource allocation control in physical layer and MAC sub-layer terminated at the radio base station eNB and the mobile station UE is being specified as an uplink radio resource controlling method.

To be more precise, an uplink scheduler in the radio base station eNB is configured to determine a mobile station UE targeted for uplink radio resource allocation, a physical resource (frequency resource) to be allocated to the mobile station UE, and an amount of data which the mobile station is permitted to transmit, for each subframe (or a TTI), and to notify the mobile station UE of what are thus determined through transmission via an L1/L2 control channel (UL grant).

In this regard, the radio base station eNB needs to know an amount of data remaining in a transmission buffer (for the uplink) in the mobile station UE, in order to perform scheduling of uplink radio resources efficiently.

In the LTE, the mobile station UE is configured to report the amount of data as a "buffer status report" to the radio base station eNB by use of an uplink radio resource dedicatedly allocated to the mobile station by the radio base station eNB.

Here, the uplink radio resource with which the "buffer status report" is transmitted is specifically an uplink shared channel (UL-SCH). The radio base station eNB is configured to allocate the UL-SCH to the mobile station UE by use of the L1/L2 control channel (UL grant).

Moreover, the contents of the "buffer status report" have been determined to indicate the amount of data remaining in the transmission buffer of the mobile station UE for each radio bearer or logical channel group.
Non-patent Document 1: 3GPP TS36.300
Non-patent Document 2: 3GPP TS36.321

However, in the LTE, a trigger for the mobile station UE to transmit the "buffer status report" to the radio base station eNB has not been determined yet.

In the meantime, the radio base station eNB and the mobile station UE also perform similar high-speed uplink radio resource allocation control in the EUL (enhance uplink) for which the 3GGP has already formulated standard specifications.

Further, for the EUL, a technique to report an amount of data remaining in a transmission buffer of a mobile station UE to a radio base station eNB as "scheduling information" has been specified similarly.

The "scheduling information" is supposed to report a total amount of data (of all logical channels) remaining in the transmission buffer of the mobile station UE, an amount of data of a logical channel with the highest priority among the data remaining in the transmission buffer of the mobile station UE, and an identifier of the logical channel.

Moreover, the following timings are defined as triggers to report the "scheduling information".

1. Timing when new data is generated in the transmission buffer of the mobile station UE while the transmission buffer is empty.

2. Timing when new data of a logical channel is generated in the transmission buffer of the mobile station UE, the logical channel having a higher priority than a logical channel to which data remaining in the transmission buffer before the generation belongs.

3. Timing when not only all the data but also the "scheduling information" can be transmitted by use of the uplink radio resource allocated by the radio base station eNB.

4. Timing when a timer in the mobile station UE expires.

It is conceivable that the LTE also employs transmission triggers for the "buffer status report" similar to the EUL.

In fact, the above-described transmission triggers to 3 are deemed to be necessary for timely notifying, to the uplink scheduler of the radio base station eNB, a change from a state where the transmission buffer of the mobile station UE (or a transmission buffer of a specific radio bearer group) is empty to a state where data is generated therein, and a change from a state where the transmission buffer of the mobile station UE is not empty to a state where the transmission buffer is empty.

In addition to these triggers, it is necessary to employ triggers for informing, to the radio base station eNB, changes in the amount of data remaining in the transmission buffer of the mobile station UE while the transmission buffer of the mobile station UE is not empty, such as a decrease in the amount of remaining data attributable to uplink data transmission or an increase in the amount of remaining data attributable to generation of new data.

The EUL employs the above-mentioned timer as these triggers for the mobile station UE to report such changes in the amount of remaining data while the transmission buffer of the mobile station UE is not empty.

To be more precise, the EUL adopts a method in which the mobile station UE starts the timer when transmitting the "scheduling information" to the radio base station eNB, stops the timer when the transmission buffer becomes empty, and transmits the "scheduling information" to the radio base station eNB when the timer expires.

As a result, in the EUL, the mobile station UE is configured to periodically transmit the "scheduling information" to the radio base station eNB as long as data remains in the transmission buffer of the mobile station UE.

It is conceivable that the LTE also adopts control using a similar timer to that in the EUL. However, the uplink in the LTE has a completely different point from that in the EUL. Hence, it is deemed undesirable to set up the transmission triggers for the "buffer status report" on a timer basis as employed in the LTE.

To be more precise, there is a difference between the EUL and LTE in that the EUL is the system that always reserves the resource for the mobile station UE to transmit the "scheduling information" whereas the LTE is the system that does not reserve the resource for the mobile station UE to transmit the "buffer status report"_{.}

This difference is attributable to the fact that the EUL adopts CDMA-based non-orthogonal access whereas the LTE uplink adopts FDMA-based orthogonal access.

Specifically, in the EUL, multiple mobile stations UE can perform uplink transmission by using the same frequency band in accordance with the CDMA. Accordingly, even if a certain mobile station does not use the allocated radio resource, another mobile station can utilize the radio resource in the same frequency band instead. For this reason, the uplink radio resources can be constantly allocated to the respective mobile stations UE without any trouble for the "scheduling information" that rarely occurs.

In contrast, in the LTE uplink, multiple mobile stations UE are assigned unique frequency bands, respectively, at one time period in accordance with the FDMA, and are not allowed to share the uplink radio resources once allocated among the multiple mobile stations UE. As a consequence, a radio resource will be wasted if constantly allocated for the "buffer status report" that rarely occurs.

In sum, if the LTE adopts the method of causing the mobile station UE to periodically transmit the "buffer status report" by using the timer similar to the EUL, the radio base station eNB needs to allocate the UL-SCH using the L1/L2 control channel (UL grant) every time the "buffer status reports" is transmitted, which may result in wasting uplink radio resources and downlink radio resources.

To be more precise, if a specific mobile station UE periodically transmits the "buffer status report" when the uplink scheduler in the radio base station eNB does not allocate an uplink radio resource to the mobile station UE, the downlink radio resource is consumed by transmission of the L1/L2 control channel (UL grant) and the uplink radio resource is consumed by allocation of the UL-SCH for transmitting the "buffer status report". These consumptions are a waste of radio resources.

Here, conceivable reasons why the radio base station eNB scheduler determines not to allocate an uplink radio resource to a specific mobile station UE for a certain period include reasons, for example, that: the radio quality of an uplink radio link with the specific mobile station UE is poor; uplink radio resources have been allocated to the mobile station UE relatively frequently in the past and therefore an uplink radio resource should be allocated to another mobile station to which uplink radio resources have not been allocated frequently in past; and data mapped to a radio bearer of the mobile station UE has low priority (QoS) and thus an uplink radio resource should be allocated to a mobile station UE having data mapped to another radio bearer with higher priority (QoS).

### Disclosure of the Invention

The present invention has been made in view of the foregoing problems and an object thereof is to provide a mobile communication system, a mobile station and a radio base station which are capable of transmitting the "buffer status report" at an appropriate timing in an uplink of the LTE while avoiding a waste of uplink radio resources and downlink radio resources.

A first aspect of the present invention is summarized as a mobile communication system in which a mobile station is configured to transmit uplink data to a radio base station by using an uplink radio resource allocated by the radio base station, wherein the mobile station is configured to report an amount of data remaining in a transmission buffer of the mobile station to the radio base station by use of the allocated uplink radio resource, upon completion of a predetermined number of times of allocation of the uplink radio resource to the mobile station by the radio base station.

In the first aspect, the radio base station can be configured to inform, to the mobile station, the predetermined number of times.

A second aspect of the present invention is summarized as a mobile communication system in which a mobile station is configured to transmit uplink data to a radio base station by using an uplink radio resource allocated by the radio base station, wherein the mobile station is configured to report an amount of data remaining in a transmission buffer of the mobile station to the radio base station by using the allocated uplink radio resource, when the radio base station allocates the uplink radio resource to the mobile station, and when an uplink radio resource allocation signal transmitted from the radio base station and used for notification of the allocated uplink radio resource requests a report on the amount of data remaining in the transmission buffer of the mobile station.

In the second aspect, the uplink radio resource allocation signal can be configured to request the report on the amount of data remaining in the transmission buffer of the mobile station, by using one bit included in the uplink radio resource allocation signal.

In the second aspect, the one bit included in the uplink radio resource allocation signal can take any of a value indicating a request for the report on the amount of data remaining in the transmission buffer, and a value indicating no request for the report on the amount of data remaining in the transmission buffer.

A third aspect of the present invention is summarized as a mobile station configured to transmit uplink data to a radio base station by using an uplink radio resource allocated by the radio base station, wherein the mobile station is configured to report an amount of data remaining in a transmission buffer of the mobile station to the radio base station by use of the allocated uplink radio resource, upon completion of a predetermined number of times of allocation of the uplink radio resource to the mobile station by the radio base station.

In the third aspect, the radio base station can be configured to inform, to the mobile station, the predetermined number of times.

A fourth aspect of the present invention is summarized as a mobile station configured to transmit uplink data to a radio base station by using an uplink radio resource allocated by the radio base station, wherein the mobile station is configured to report an amount of data remaining in a transmission buffer of the mobile station to the radio base station by use of the allocated uplink radio resource, when the radio base station allocates the uplink radio resource to the mobile station, and when an uplink radio resource allocation signal transmitted from the radio base station and used for notification of the allocated uplink radio resource requests a report on the amount of data remaining in the transmission buffer of the mobile station.

In the fourth aspect, the uplink radio resource allocation signal can be configured to request the report on the amount of data remaining in the transmission buffer of the mobile station, by using one bit included in the uplink radio resource allocation signal.

In the fourth aspect, the one bit included in the uplink radio resource allocation signal can take any of a value indicating a request for the report on the amount of data remaining in the transmission buffer, and a value indicating no request for the report on the amount of data remaining in the transmission buffer.

A fifth aspect of the present invention is summarized as a radio base station used in a mobile communication system in which a mobile station is configured to transmit uplink data to the radio base station by using an uplink radio resource allocated by the radio base station, wherein the radio base station is configured to request a report on an amount of data remaining in a transmission buffer of the mobile station by using one bit included in an uplink radio resource allocation signal used for notification of the allocated uplink radio resource, when allocating the uplink radio resource to the mobile station.

In the fifth aspect, the one bit included in the uplink radio resource allocation signal can take any of a value indicating a request for the report on the amount of data remaining in the transmission buffer, and a value indicating no request for the report on the amount of data remaining in the transmission buffer.

As described above, the present invention can provide a mobile communication system, a mobile station and a radio base station which are capable of transmitting the "buffer status report" at an appropriate timing in an uplink of the LTE while avoiding a waste of uplink radio resources and downlink radio resources.

### Brief Description of the Drawings

[Fig. 1] Fig. 1 is an overall configuration diagram of a mobile communication system according to a first embodiment of the present invention.
[Fig. 2] Fig. 2 is a flowchart showing an operation of the mobile communication system according to the first embodiment of the present invention.
[Fig. 3] Fig. 3 is an overall configuration diagram of a mobile communication system according to a second embodiment of the present invention.
[Fig. 4] Fig. 4 is a flowchart showing an operation of the mobile communication system according to the second embodiment of the present invention.

### Best Modes for Carrying Out the Invention

### (Mobile communication system according to first embodiment of the present invention)

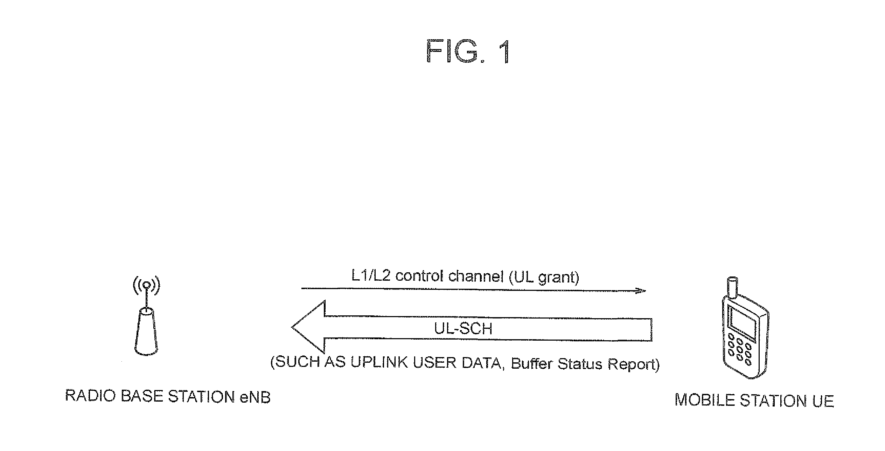

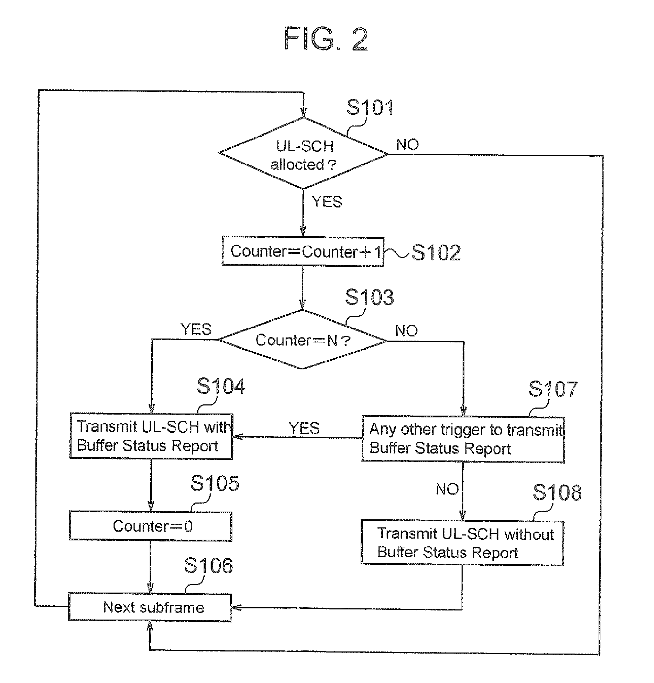

A mobile communication system according to a first embodiment of the present invention will be described with reference to Fig. 1 and Fig. 2. In this embodiment, a mobile communication system of the LTE scheme will be described as an example of a mobile communication system. However, the present invention is also applicable to mobile communication systems other than the mobile communication system of the LTE scheme.

As shown in Fig. 1, in the mobile communication system according to the first embodiment of the present invention, a mobile station UE is configured to transmit uplink data (uplink user data, a "buffer status report", and the like) to a radio base station eNB, by use of an uplink radio resource (UL-SCH) allocated by the radio base station eNB.

Meanwhile, the radio base station eNB is configured to notify, to the mobile station UE, allocation of the UL-SCH (the uplink radio resource) through an L1/L2 control channel (UL grant).

Moreover, the mobile station UE is configured to report an amount of data remaining in a transmission buffer of the mobile station UE to the radio base station eNB by using the allocated uplink radio resource, when the radio base station eNB allocates the uplink radio resource to the mobile station UE a predetermined number of times (N).

Here, the radio base station eNB is configured to specify the predetermined number of times (N) to the mobile station UE.

Next, an operation of the mobile station UE in the mobile communication system according to this embodiment will be described with reference to Fig. 2.

As shown in Fig. 2, in step S101, the mobile station UE checks for each subframe whether or not there is allocation of the UL-SCH (the uplink radio resource). When judged that the UL-SCH is allocated, the mobile station UE judges whether or not to transmit the "buffer status report" by using the UL-SCH allocated by the radio base station eNB, based on a flowchart shown in Fig. 2.

When the UL-SCH is allocated, the mobile station UE increments a value of a counter held inside the mobile station UE by one, in step S102.

When the value of the counter is equal to the predetermined number of times (N) in step S103, the mobile station UE transmits the "buffer status report" together with uplink user data to the radio base station eNB by using the allocated UL-SCH in step S104.

Here, the mobile station UE transmits only the "buffer status report", when it is not possible to transmit the uplink user data by using the allocated UL-SCH.

After completing transmission of the "buffer status report", the mobile station UE sets the value of the counter to zero in step S105, and again checks whether or not the UL-SCH is allocated to a subsequent subframe in steps S106 and S101.

On the other hand, if the value of the counter is not equal to the predetermined number of times (N) (i.e., if the value is smaller than the predetermined number of times (N)) and if there is no other trigger to transmit the "buffer status report" in step S107, the mobile station UE transmits only the uplink user data by using the allocated UL-SCH in step S108, and again checks whether or not the UL-SCH is allocated to a subsequent subframe in steps S106 and S101.

Meanwhile, even if the value of the counter is not equal to the predetermined number of times (N) (i.e., if the value is smaller than the predetermined number of times (N)), when transmission of the "buffer status report" is required in response to another trigger to transmit the "buffer status report" in step S107, the mobile station UE transmits the "buffer status report" together with the uplink user data to the radio base station eNB by using the allocated UL-SCH in step S104, then sets the value of the counter to zero in step S105, and then again checks whether or not the UL-SCH is allocated to the subsequent subframe in steps S106 and S101.

Here, conceivable timings as another trigger to transmit the "buffer status report" include the following.

1. Timing when new data is generated in the transmission buffer of the mobile station UE while the transmission buffer is empty.

2. Timing when new data for a logical channel is generated in the transmission buffer of the mobile station UE, the logical channel having a higher priority than logical channels to which data previously remaining in the transmission buffer belongs.

3. Timing when not only all the data but also the "scheduling information" can be transmitted by use of the uplink radio resource allocated by the radio base station eNB.

By following the control according to the flowchart shown in Fig. 2, the mobile station UE consequently transmits the "buffer status report" in a subframe to which the UL-SCH is allocated for the Nth time after the last transmission of the "buffer status report".

Such a value N is notified from the radio base station eNB to the mobile station UE by use of a layer 3 message (a RRC message).

Conceivable timings at which the radio base station eNB notifies the mobile station UE of the value N include a timing to start communication with the mobile station UE, a timing to additionally set up a new radio bearer between the radio base station eNB and the mobile station UE, a timing to delete a radio bearer set up in the past, a timing to carry out a handover, and so forth.

In the mobile communication system according to this embodiment, the mobile station UE is configured to transmit the "buffer status report" every predetermined-numbered time the radio base station eNB allocates the UL-SCH (the uplink radio resource) to the mobile station, by using the the UL-SCH allocated in the predetermined-numbered allocation.

Thus, according to the mobile communication system of this embodiment, it is possible to notify, to the radio base station eNB, a change in the amount of data remaining in the transmission buffer of the mobile station UE in the state where the data remains in the transmission buffer. This allows an uplink scheduler in the radio base station eNB to allocate the radio resources efficiently. Meanwhile, the uplink scheduler in the radio base station eNB avoids transmission of the "buffer status report" in a period when the uplink radio resource is not allocated to the mobile station UE, thereby avoiding wasting uplink radio resources and downlink radio resources.

### (Mobile communication system according to second embodiment of the present invention)

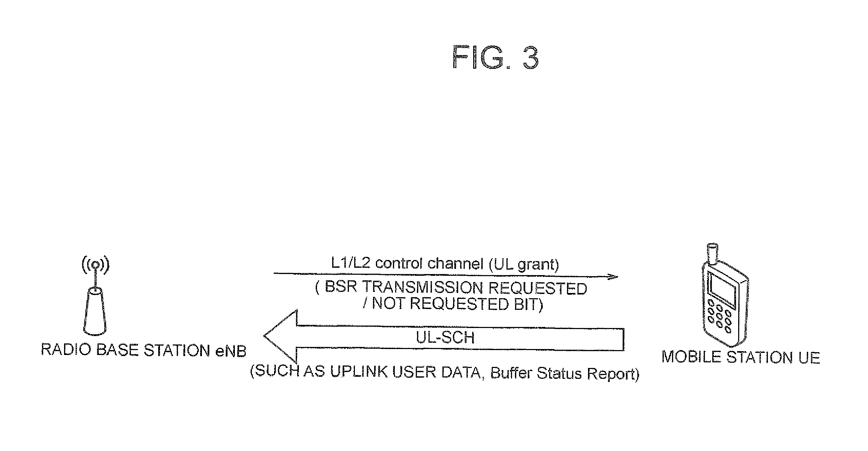

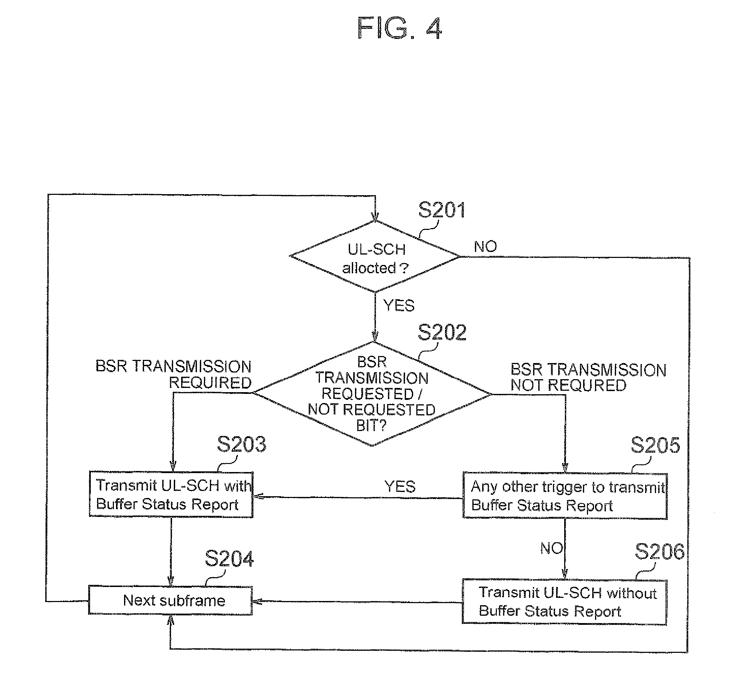

A mobile communication system according to a second embodiment of the present invention will be described with reference to Fig. 3 and Fig. 4. In this embodiment, an mobile communication system of the LTE scheme will be described as an example of a mobile communication system. However, the present invention is also applicable to mobile communication systems other than the mobile communication system of the LTE scheme.

As shown in Fig. 3, in the mobile communication system according to the second embodiment of the present invention, the mobile station UE is configured to transmit uplink data (uplink user data, the "buffer status report", and the like) to the radio base station eNB, by use of the uplink radio resource (UL-SCH) allocated by the radio base station eNB.

Meanwhile, the radio base station eNB is configured to notify, to the mobile station UE, allocation of the UL-SCH (the uplink radio resource) through the L1/L2 control channel (UL grant).

Moreover, the mobile station UE is configured to report an amount of data remaining in the transmission buffer of the mobile station UE to the radio base station eNB by using the allocated UL-SCH, when the radio base station eNB allocates the UL-SCH (the uplink radio resource) to the mobile station UE, and when the L1/L2 control channel (UL grant) (the uplink radio resource allocation signal) transmitted from the radio base station UE and used for notification of the allocated UL-SCH requests a report on the amount of data remaining in the transmission buffer of the mobile station UE.

Here, the radio base station eNB is configured to request the report on the amount of data remaining in the transmission buffer of the mobile station UE by use of one bit (a BSR transmission requested / not requested bit) included in the L1/L2 control channel (UL grant).

Moreover, the one bit included in the L1/L2 control channel (UL grant) can take any of: a value (buffer status report transmission required) indicating requesting the report on the amount of data remaining in the transmission buffer of the mobile station UE; and a value (buffer status report transmission not required) indicating not requesting the report on the amount of data remaining in the transmission buffer of the mobile station UE.

Next, an operation of the mobile station UE in the mobile communication system according to this embodiment will be described with reference to Fig. 4.

As shown in Fig. 4, in step S201, the mobile station UE checks for each subframe whether or not there is allocation of the UL-SCH (the uplink radio resource). When judged that the UL-SCH is allocated, the mobile station UE judges whether or not to transmit the "buffer status report" by using the UL-SCH allocated by the radio base station eNB, based on a flowchart shown in Fig. 4.

In step S202, when the UL-SCH is allocated through the L1/L2 control channel (UL grant) in a given subframe, the mobile station UE checks the value of the "BSR (buffer status report) transmission requested / not requested bit" included in the L1/L2 control channel (UL grant).

When the value of the "BSR transmission requested / not requested bit" indicates "buffer status report transmission required", the mobile station UE transmits the "buffer status report" together with the uplink user data to the radio base station eNB by using the allocated UL-SCH in step S203.

Here, the mobile station UE transmits only the "buffer status report" when it is not possible to transmit the uplink user data by using the allocated UL-SCH.

After completing transmission of the "buffer status report",the mobile station UE again checks whether or not the UL-SCH is allocated to a subsequent subframe in steps S106 and S101.

On the other hand, if the value of the "BSR transmission requested / not requested bit" indicates "buffer status report transmission not required" and if there is no other trigger to transmit the "buffer status report" in step S205, the mobile station UE transmits only the uplink user data by using the allocated UL-SCH in step S206, and again checks whether or not the UL-SCH is allocated to a subsequent subframe in steps S106 and S101.

Meanwhile, even if the value of the "BSR transmission requested / not requested bit" indicates "buffer status report transmission not required", when transmission of the "buffer status report" is required in response to another trigger to transmit the "buffer status report" 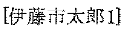 , the mobile station UE transmits the "buffer status report" together with the uplink user data to the radio base station eNB by using the allocated UL-SCH in step S203, and then again checks whether or not the UL-SCH is allocated to the subsequent subframe in steps S204 and S101.

Here, conceivable timings as another trigger to transmit the "buffer status report" include the following.

1. Timing when new data is generated in the transmission buffer of the mobile station UE while the transmission buffer is empty.

2. Timing when new data for a logical channel is generated in the transmission buffer of the mobile station UE, the logical channel having a higher priority than logical channels to which data previously remaining in the transmission buffer belongs.

3. Timing when not only all the data but also the "scheduling information" can be transmitted by use of the uplink radio resource allocated by the radio base station eNB.

In the mobile communication system according to this embodiment, the "buffer status report" is configured to be transmitted by using the UL-SCH allocated by the uplink radio resource allocation signal (the L1/L2 control channel (UL grant)) that requests transmission of the "buffer status report", when the radio base station eNB includes the "BSR requested / not requested bit" in the uplink radio resource allocation signal (the L1/L2 control channel (UL grant)) used for notifying the mobile station UE of the allocated UL-SCH (the uplink radio resource), and when the "BSR requested / not requested bit" indicates the request for transmission of the "buffer status report".

Thus, according to the mobile communication system of this embodiment, it is possible to notify, to the radio base station eNB, a change in the amount of data remaining in the transmission buffer of the mobile station UE in the state where the data remains in the transmission buffer. This allows the uplink scheduler in the radio base station eNB to allocate the radio resources efficiently. Meanwhile, the uplink scheduler in the radio base station eNB avoids transmission of the "buffer status report" in a period when the uplink radio resource is not allocated to the mobile station UE, thereby avoiding wasting uplink radio resources and downlink radio resources.

Note that the above-described operations of the mobile station UE and radio base station eNB may be implemented by hardware, software modules executed by a processor, or a combination of the hardware and the software modules.

Each software module may be provided in a storage medium of any form, such as a random access memory (RAM), a flash memory, a read only memory (ROM), an erasable programmable ROM (EPROM), an electronically erasable and programmable ROM (EEPROM), a register, a hard disk, a removable disk or a CD-ROM.

The storage medium is connected to a processor so that the processor can read or write information from or into the storage medium. Alternatively, the storage medium may be integrated in a processor. Further, the storage medium and the processor may be provided in an ASIC, and the ASIC may be provided in the mobile station UE and the radio base station eNB. Alternatively, the storage medium and the processor may be provided as discrete components in the mobile station UE and the radio base station eNB.

While the present invention has been described in detail above by using the foregoing embodiments, it is apparent to those skilled in the art that the present invention is not limited to the embodiments described herein. The present invention may be practiced in the form of modifications and variations without departing from the gist and scope of the present invention as defined in the description of the scope of claims. It is to be therefore understood that the description herein is for the purpose of illustration only and is not intended to limit the present invention.

It is to be noted that the entire contents of Japanese Patent Application No. 2007-211994 (filed on August 15, 2007) are incorporated herein by reference.

### Industrial Applicability

As described above, a mobile communication system, a mobile station, and a radio base station according to the present invention are capable of transmitting a "buffer status report" at an appropriate timing in an uplink of the LTE while avoiding a waste of uplink radio resources and downlink radio resources, and are therefore useful.

## Claims

1. A mobile communication system in which a mobile station is configured to transmit uplink data to a radio base station by using an uplink radio resource allocated by the radio base station, wherein
the mobile station is configured to report an amount of data remaining in a transmission buffer of the mobile station to the radio base station by use of the allocated uplink radio resource, upon completion of a predetermined number of times of allocation of the uplink radio resource to the mobile station by the radio base station.

2. The mobile communication system according to claim 1, wherein
the radio base station is configured to inform, to the mobile station, the predetermined number of times.

3. A mobile communication system in which a mobile station is configured to transmit uplink data to a radio base station by using an uplink radio resource allocated by the radio base station, wherein
the mobile station is configured to report an amount of data remaining in a transmission buffer of the mobile station to the radio base station by using the allocated uplink radio resource, when the radio base station allocates the uplink radio resource to the mobile station, and when an uplink radio resource allocation signal transmitted from the radio base station and used for notification of the allocated uplink radio resource requests a report on the amount of data remaining in the transmission buffer of the mobile station.

4. The mobile communication system according to claim 3, wherein
the uplink radio resource allocation signal is configured to request the report on the amount of data remaining in the transmission buffer of the mobile station, by using one bit included in the uplink radio resource allocation signal.

5. The mobile communication system according to claim 4, wherein
the one bit included in the uplink radio resource allocation signal takes any of a value indicating a request for the report on the amount of data remaining in the transmission buffer, and a value indicating no request for the report on the amount of data remaining in the transmission buffer.

6. A mobile station configured to transmit uplink data to a radio base station by using an uplink radio resource allocated by the radio base station, wherein
the mobile station is configured to report an amount of data remaining in a transmission buffer of the mobile station to the radio base station by use of the allocated uplink radio resource, upon completion of a predetermined number of times of allocation of the uplink radio resource to the mobile station by the radio base station.

7. The mobile station according to claim 6, wherein
the radio base station is configured to inform, to the mobile station, the predetermined number of times.

8. A mobile station configured to transmit uplink data to a radio base station by using an uplink radio resource allocated by the radio base station, wherein
the mobile station is configured to report an amount of data remaining in a transmission buffer of the mobile station to the radio base station by use of the allocated uplink radio resource, when the radio base station allocates the uplink radio resource to the mobile station, and when an uplink radio resource allocation signal transmitted from the radio base station and used for notification of the allocated uplink radio resource requests a report on the amount of data remaining in the transmission buffer of the mobile station.

9. The mobile station according to claim 8, wherein
the uplink radio resource allocation signal is configured to request the report on the amount of data remaining in the transmission buffer of the mobile station, by using one bit included in the uplink radio resource allocation signal.

10. The mobile station according to claim 9, wherein
the one bit included in the uplink radio resource allocation signal takes any of a value indicating a request for the report on the amount of data remaining in the transmission buffer, and a value indicating no request for the report on the amount of data remaining in the transmission buffer.

11. A radio base station used in a mobile communication system in which a mobile station is configured to transmit uplink data to the radio base station by using an uplink radio resource allocated by the radio base station, wherein
the radio base station is configured to request a report on an amount of data remaining in a transmission buffer of the mobile station by using one bit included in an uplink radio resource allocation signal used for notification of the allocated uplink radio resource, when allocating the uplink radio resource to the mobile station.

12. The radio base station according to claim 11, wherein
the one bit included in the uplink radio resource allocation signal takes any of a value indicating a request for the report on the amount of data remaining in the transmission buffer, and a value indicating no request for the report on the amount of data remaining in the transmission buffer.
